# EUROPÄISCHE PATENTSCHRIFT

(11) **EP 0 803 391 B1**
(45) Veröffentlichungstag und Bekanntmachung des Hinweises auf die Patenterteilung: **07.06.2000**
(21) Anmeldenummer: 97104929.1
(22) Anmeldetag: 22.03.1997
(51) Int. Cl.: B60J 7/12

(54) **Faltverdeck für Fahrzeuge**
Foldable top for vehicle
Toit pliant pour véhicule

(30) Priorität: 24.04.1996 DE 19616255
(43) Veröffentlichungstag der Anmeldung: 29.10.1997
(73) Patentinhaber: Dr.Ing.h.c. F. Porsche Aktiengesellschaft, 70435 Stuttgart (DE)
(72) Erfinder: Pfertner, Kurt, 71299 Wimsheim (DE); Just, Jan, 72074 Tübingen-Bebenhausen (DE); Kolb, Eugen, 70469 Stuttgart (DE)

(56) Entgegenhaltungen:
- DE-U- 9 102 147
- GB-A- 882 575
- US-A- 2 855 663

## Beschreibung

Die Erfindung bezieht sich auf ein Faltverdeck für Fahrzeuge mit einem den hinteren unteren Rand des Verdeckbezuges aufnehmenden Spannbügel, der sich in Schließstellung des Verdecks unter Zwischenschaltung zumindest eines Dichtkörpers an der Unterseite eines Aufbauteiles abstützt.

Eine derartige Anordnung geht aus der DE-U 91 02 147 hervor. In Schließstellung des Verdecks wird der Spannbügel durch die Anbindung des Verdeckbezugs nach oben gegen das darüberliegende Aufbauteil gedrückt, wobei der Dichtkörper je nach Witterungsbedingung und den auftretenden Toleranzen mehr oder weniger stark zusammengedrückt wird, was unter ungünstigen Bedingungen zu einer bleibenden Verformung des angrenzenden Aufbauteiles führen kann.

Aufgabe der Erfindung ist es, an einem heckseitigen Spannbügel solche Vorkehrungen zu treffen, daß in Schließstellung des Faltverdecks der Spannbügel nur mit einer definierten Anpreßkraft gegen das darüberliegende Aufbauteil drückt, so daß ein zu starkes Zusammenquetschen des dazwischenliegenden Dichtkörpers vermieden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung zumindest einer einstellbaren Entlastungseinrichtung zwischen Spannbügel und Überrollbügel in einfacher Weise die gewünschte Einbaulage des Spannbügels bei geschlossenem Verdeck einstellbar ist, so daß der am zwischengeschalteten Dichtkörper auftretende Anlagedruck steuerbar ist.

Der Spannbügel wird durch eine oder mehrere Entlastungseinrichtungen bei geschlossenem Verdeck nach unten gezogen, so daß eine unerwünschte zu starke Beaufschlagung des angrenzenden Aufbauteils bzw. des Dichtkörpers vermieden wird.

Die Entlastungseinrichtung weist einen einfachen Aufbau auf und umfaßt ein Spannseil, das einerseits an den Spannbügel und andererseits an den angrenzenden vorgelagerten Überrollbügel lösbar angeschlossen ist. Zumindest ein Ende des Spannseils ist lösbar befestigt, um den Spannbügel in eine aufgestellte aufrechte Montagestellung schwenken zu können.

Das dem Überrollbügel zugekehrte Ende des Spannseiles ist über eine Kugelkopfverbindung an einen Schlitten angeschlossen, der in einem Aufnahmeabschnitt eines überrollbügelseitigen Halters verschiebbar gelagert ist, wobei die Stellung des Schlittens mittels einer Stellschraube veränderbar ist.

Ein Ausführungsbeispiel der Erfindung ist in der Zeichnung dargestellt und wird im folgenden näher erläutert.

Es zeigen
- Fig. 1: eine Teilseitenansicht eines Faltverdecks eines Fahrzeuges mit einer Entlastungseinrichtung für den heckseitigen Spannbügel,
- Fig. 2: einen Schnitt nach der Linie II-II der Fig. 1 in größerer Darstellung und
- Fig. 3: einen Schnitt nach der Linie III-III der Fig. 1 in größerer Darstellung.

Ein Faltverdeck 1 für ein Fahrzeug umfaßt ein tragendes Verdeckgestell 2 und einen an diesem befestigten elastischen Verdeckbezug 3.

Im hinteren querverlaufenden Bereich des Faltverdecks 1 ist eine Heckscheibe 4 vorgesehen, die durch eine starre oder flexible Sichtscheibe gebildet wird.

Ein hinterer, unterer Rand 5 des Verdeckbezuges 2 ist unterhalb der Heckscheibe 4 an einem Spannbügel 6 befestigt, der zumindest abschnittsweise durch ein gebogenes Strangpreßprofilteil aus einer Leichtmetallegierung gebildet wird. Der Spannbügel 6 umspannt - in der Draufsicht gesehen - den Fahrgastraum bogenförmig und ist an seinen beiden vorderen Enden drehbar mit dem Verdeckgestell verbunden.

In Schließstellung A des Faltverdecks 1 liegt der Spannbügel 6 unter Zwischenschaltung zumindest eines Dichtkörpers 7 an der Unterseite 8 des angrenzenden Aufbauteiles 9 an und zwar an dessen vorderen Rand. Das Aufbauteil 9 kann feststehend ausgebildet sein oder durch eine schwenkbare Klappe dargestellt sein.

Ein definierter Anlagedruck des oder der Dichtkörper 7 in Schließstellung A des Faltverdecks 1 wird dadurch erzielt, daß am Spannbügel 6 zumindest eine Entlastungseinrichtung 10 angreift, mittels der der Spannbügel 6 in Höhenrichtung einstellbar ist. Die Entlastungseinrichtung 10 erstreckt sich im Ausführungsbeispiel zwischen dem Spannbügel 6 und einem vorgelagerten, feststehenden Überrollbügel 11.

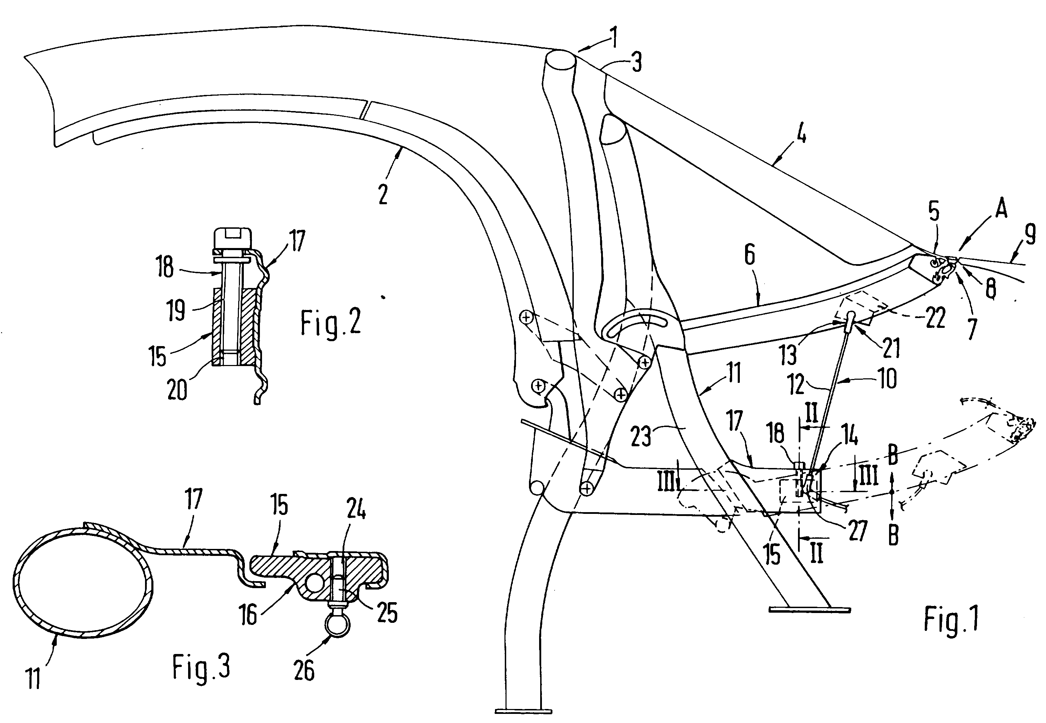

Gemäß Fig. 1 ist an jeder Längsseite des Faltverdecks 1 - und zwar in einem hintenliegenden Bereich der Längserstreckung des Spannbügels 6 - eine Entlastungseinrichtung 10 angeordnet, so daß hier zwei Entlastungseinrichtungen 10 für den Spannbügel 6 vorgesehen sind.

Jede Entlastungseinrichtung 10 umfaßt ein aufrecht verlaufendes Spannseil 12, dessen eines Ende 13 an den Spannbügel 6 angeschlossen ist und dessen anderes Ende 14 mit einem Schlitten 15 verbunden ist, der in einem Aufnahmeabschnitt 16 eines am Überrollbügel 11 angebrachten Halters 17 in Höhenrichtung B-B verschiebbar gelagert ist, wobei der Schlitten 15 mittels einer Stellschraube 18 justierbar ist. Diese ist am Halter 17 drehbar gelagert, wobei ein Außengewinde 19 der Stellschraube 18 in ein Innengewinde 20 des Schlittens 15 eingedreht ist. Die Stellschraube 18 erstreckt sich in vertikaler Richtung.

Beide Enden des Spannseiles 12 sind im Ausführungsbeispiel über Kugelkopfverbindungen 21 mit einem am Spannbügel 6 angebrachten Haltewinkel 22 bzw. dem Schlitten 15 der Entlastungseinrichtung 10 verbunden. Zumindest ein Ende des Spannseiles 12 ist lösbar ausgebildet, um den Spannbügel 6 in eine aufrechte etwa vertikale Montagestellung verschwenken zu können (nicht näher dargestellt).

Auf einen am Haltewinkel 22 angebrachten Kugelkopf ist eine endseitige Kugelpfanne des Spannseiles 12 aufgesetzt. In Schließstellung A des Faltverdecks 1 verläuft das Spannseil 12 etwa vertikal oder leicht schräg. Gemäß Fig. 1 erstreckt sich das Spannseil 12 schrägverlaufend von oben hinten nach unten vorne.

Der den Schlitten 15 aufnehmende Halter 17 ist an einem hinteren schrägverlaufenden Stützabschnitt 23 des Überrollbügels befestigt und zwar durch Schweißen. Der Halter 17 ist etwa horizontal ausgerichtet und zeigt mit seinem freien Ende nach hinten. Im profilierten Aufnahmeabschnitt 16 des Halters 17 ist der Schlitten 15 geführt. Seitlich innenliegend ist in eine Gewindebohrung 24 ein Zapfen 25 mit einem endseitigen Kugelkopf 26 eingedreht, wobei auf den Kugelkopf 26 eine mit dem unteren Ende des Spannseils 12 verbundene Kugelpfanne 27 aufdrückbar ist. Die Kugelpfanne 27 läßt sich bei Bedarf vom Kugelkopf 26 lösen.

Durch Verdrehen der Stellschraube 18 bewegt sich der Schlitten 15 nach oben oder nach unten und der Spannbügel 6 kann über das Spannseil 12 eingestellt werden, so daß sich der entsprechende Anlagedruck des Dichtkörpers 7 bzw. des Spannbügels 6 einstellt.

Der Halter 17, der den Schlitten 15' aufnimmt, könnte anstelle des Überrollbügels 11 auch aufbauseitig an einem angrenzenden Aufbauteil vorgesehen sein.

## Patentansprüche

1. Faltverdeck für Fahrzeuge mit einem heckseitigen, den hinteren unteren Rand des Verdeckbezuges aufnehmenden Spannbügel (6), der sich in Schließstellung des Verdecks unter Zwischenschaltung zumindest eines Dichtkörpers (7) an der Unterseite eines Aufbauteiles abstützt, dadurch gekennzeichnet, daß der Spannbügel (6) über zumindest eine einstellbare Entlastungseinrichtung (10) mit einem feststehenden Überrollbügel (11) verbunden ist.

2. Faltverdeck nach Anspruch 1, dadurch gekennzeichnet, daß an beiden Längsseiten des - in der Draufsicht gesehen - den Fahrgastraum bogenförmig umspannenden Spannbügels (6) jeweils eine Entlastungseinrichtung (10) vorgesehen ist.

3. Faltverdeck nach den Ansprüchen 1 und 2, dadurch gekennzeichnet, daß die Entlastungseinrichtung (10) ein aufrecht verlaufendes Spannseil (12) umfaßt, dessen eines Ende (13) an den Spannbügel (6) angeschlossen ist und dessen anderes Ende (14) mit einem Schlitten (15) verbunden ist, der in einem Aufnahmeabschnitt (16) eines am Überrollbügel (11) angebrachten Halters (17) einstellbar gelagert ist.

4. Faltverdeck nach Anspruch 3, dadurch gekennzeichnet, daß beide Enden (13, 14) des Spannseiles (12) über Kugelkopfverbindungen (21) lösbar an den Spannbügel (6) bzw. an den Überrollbügel (11) angeschlossen sind.

5. Faltverdeck nach Anspruch 3 oder 4, dadurch gekennzeichnet, daß das Spannseil (12) in Schließstellung (A) des Faltverdecks (1) schräg von oben hinten nach unten vorne verläuft und zwar in einem seitlich außenliegenden längsgerichteten Bereich des Spannbügels (6).

6. Faltverdeck nach Anspruch 3, 4 oder 5, dadurch gekennzeichnet, daß der Halter (17) an einem schrägverlaufenden hinteren Stützabschnitt (23) des Überrollbügels (11) angebracht ist und zwar auf der dem Heckbereich zugekehrten Seite.

7. Faltverdeck nach Anspruch 3, dadurch gekennzeichnet, daß durch Verdrehen einer aufrecht angeordneten Stellschraube (18) der Schlitten (15) innerhalb des Aufnahmeabschnittes (16) in Höhenrichtung (B-B) justierbar ist.

8. Faltverdeck nach einem oder mehreren der Ansprüche 3 bis 7, dadurch gekennzeichnet, daß auf der dem Fahrgastraum zugekehrten Seite in eine Gewindebohrung (24) des Schlittens (15) ein Zapfen (25) mit einem endseitigen Kugelkopf (26) eingedreht ist, der mit einer Kugelpfanne (26) des Spannseils (12) lösbar verbunden ist.

## Claims

1. A folding top for vehicles with a tensioning device (6) at the tail receiving the rear lower edge of the folding-top cover and supported on the underside of a part of the body with the interposition of at least one sealing member (7) in the closed position of the cover, **characterized in that** the tensioning device (6) is connected to a fixed roll bar (11) by way of at least one adjustable relief device (10).

2. A folding top according to Claim 1, **characterized in that** one respective relief device (10) is provided on the two longitudinal sides - as seen in plan view - of the tensioning device (6) spanning the passenger compartment in the form of an arc.

3. A folding top according to Claims 1 and 2, **characterized in that** the relief device (10) comprises a tensioning cable (12) which extends vertically and one end (13) of which is attached to the tensioning device (6) and the other (14) end of which is connected to a slide (15) mounted adjustably in a receiving portion (16) of a retaining means (17) arranged on the roll bar (11).

4. A folding top according to Claim 3, **characterized in that** the two ends (13, 14) of the tensioning cable (12) are attached to the tensioning cable (12) and to the roll bar (11) in a detachable manner by way of ball-type connexions (21).

5. A folding top according to Claim 3 or 4, **characterized in that** the tensioning cable (12) extends obliquely from the rear at the top to the front at the bottom in the closed position (A) of the folding top (1), namely in a longitudinally orientated region of the tensioning device (6) situated laterally on the outside.

6. A folding top according to Claim 3, 4 or 5, **characterized in that** the retaining means (17) is attached to an obliquely extending rear support portion (23) of the roll bar (11), namely on the side facing the tail region.

7. A folding top according to Claim 3, **characterized in that** the slide (15) is adjustable in the vertical direction (**B-B**) inside the receiving portion (16) by turning an adjustment screw (18) arranged vertically.

8. A folding top according to one or more of Claims 3 to 7, **characterized in that** a pin (25) with a ball head (26) at the end is screwed into a threaded bore (24) in the slide (15) on the side facing the passenger compartment, the ball head (26) being detachably connected to a ball socket (27) of the tensioning cable (12).

## Revendications

1. Capote pliante pour véhicules automobiles comportant un étrier de tension (6) arrière qui reçoit le bord inférieur arrière du revêtement de la capote et qui, en position de fermeture de la capote, prend appui contre la face inférieure d'un élément de la carrosserie, par l'intermédiaire d'un corps d'étanchéité (7), caractérisée en ce que l'étrier de tension (6) est relié à un arceau de sécurité (11) fixe, par l'intermédiaire d'au moins un dispositif de décharge (10) réglable.

2. Capote pliante selon la revendication 1, caractérisée en ce qu'un dispositif de décharge (10) est prévu sur chacun des deux côtés longitudinaux de l'étrier de tension (6) - vu de dessus - qui s'étend en arc au-dessus de l'habitacle.

3. Capote pliante selon les revendications 1 et 2, caractérisée en ce que le dispositif de décharge (10) comporte un câble de tension (12) s'étendant verticalement dont une extrémité (13) est raccordée à l'étrier de tension (6) et dont l'autre extrémité (14) est reliée à un chariot (15) qui est monté réglable dans une partie de logement (16) d'un support (17) monté sur l'arceau de sécurité (11).

4. Capote pliante selon la revendication 3, caractérisée en ce que les deux extrémités (13, 14) du câble de tension (12) sont raccordées de manière détachable respectivement à l'étrier de tension (6) et à l'arceau de sécurité (11) par des joints à tête sphérique (21).

5. Capote pliante selon la revendication 3 ou 4, caractérisée en ce que le câble de tension (12) s'étend, en position de fermeture (A) de la capote pliante (1), obliquement de la partie haute arrière vers la partie basse avant et ce dans une zone de l'étrier de tension (6) orientée longitudinalement et située sur le côté extérieur.

6. Capote pliante selon la revendication 3, 4 ou 5, caractérisée en ce que le support (17) est monté sur une partie d'appui arrière (23) s'étendant obliquement de l'étrier de sécurité (11) et ce sur le côté tourné vers l'arrière.

7. Capote pliante selon la revendication 3, caractérisée en ce que par rotation d'une vis de réglage (18) disposée verticalement, le chariot (15) peut être ajusté dans la direction de la hauteur (B-B) à l'intérieur de la partie de logement ( 16).

8. Capote pliante selon l'une des revendications 3 à 7, caractérisée en ce que sur le côté tourné vers l'habitacle, dans un trou taraudé (24) du chariot (15) est vissée une tige (25) avec une tête sphérique (26) terminale qui est reliée de manière non permanente à un coussinet sphérique (26) du câble de tension (12).
